Europäisches Patentamt

(19) European Patent Office

Office européen des brevets

(11) Publication number: **0 086 962**
**B1**

(12) EUROPEAN PATENT SPECIFICATION

(45) Date of publication of patent specification: **06.05.87**

(51) Int. Cl.⁴: **B 60 J 1/17**

(21) Application number: **83100540.0**

(22) Date of filing: **21.01.83**

(54) **Guide structure for sliding window glass.**

(30) Priority: **23.02.82 JP 26863/82**

(43) Date of publication of application:
**31.08.83 Bulletin 83/35**

(45) Publication of the grant of the patent:
**06.05.87 Bulletin 87/19**

(84) Designated Contracting States:
**DE FR GB**

(56) References cited:
**DE-A-1 430 881**
**FR-A- 666 103**
**US-A-3 703 053**

(73) Proprietor: **NISSAN MOTOR CO., LTD.**
**No.2, Takara-cho, Kanagawa-ku**
**Yokohama-shi Kanagawa-ken 221 (JP)**

(72) Inventor: **Miyamoto, Ken**
**605-2, Dream Haitsu Fukaya-cho**
**Totuka-ku Yokohama-City Kanagawa-ken (JP)**
Inventor: **Miura, Eiichi**
**4-1241 Okamoto**
**Kamakura City Kanagawa-ken (JP)**

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)**

**Description**

Background of the invention
Field of the invention

This invention relates to a guide structure for sliding window glass of an automotive door or the like, and more particularly it pertains to an improved guide structure for slidably supporting sliding window glass of a curved cross-section.

Description of the prior art

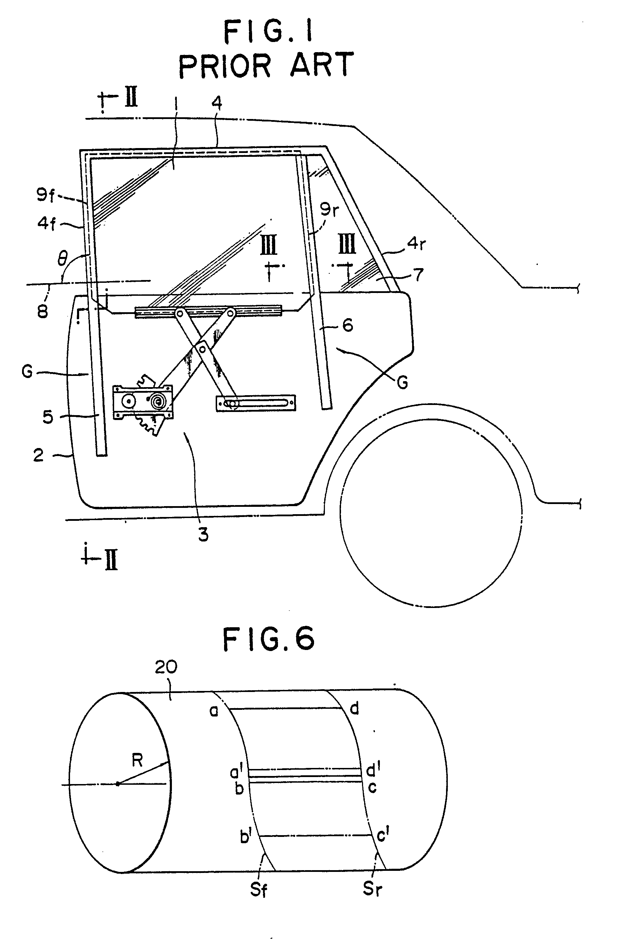

In order to have a better understanding of the present invention, reference will first be made to Figures 1 to 3 of the drawings, illustrating a conventional sashed rear door of a motor vehicle, wherein sliding window glass 1 is slidably supported by means of a window regulator 3 incorporated in a door body 2. Guide members G are provided by which the sliding window glass 1 is slidably retained at the front and rear edges thereof in such a manner as to be prevented from shaking when slid.

The guide member G retaining the front edge of the sliding window glass 1 is comprised of a front leg portion 4f of an upper sash member 4 and a lower sash member 5 connected to the lower end of the front leg portion 4f. The other guide member G for retaining the rear edge of the sliding window glass 1 is comprised of a partition sash member 6 disposed in parallel relationship with the lower sash member 5. In Figures 1 to 3, indicated at 7 is fixed window glass inserted between and retained by the partition sash member 6 and rear leg portion 4r of the upper sash member 4; shown at 10 is a glass run attached to each guide member G and slidably holding the sliding window glass 1; and denoted at 11 is a weather strip for holding the fixed window glass 7.

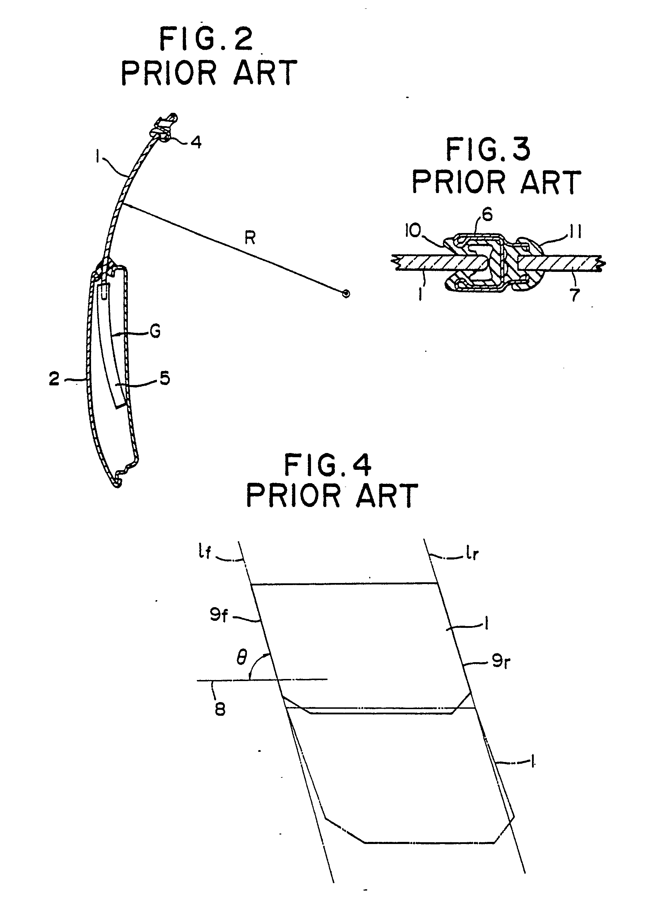

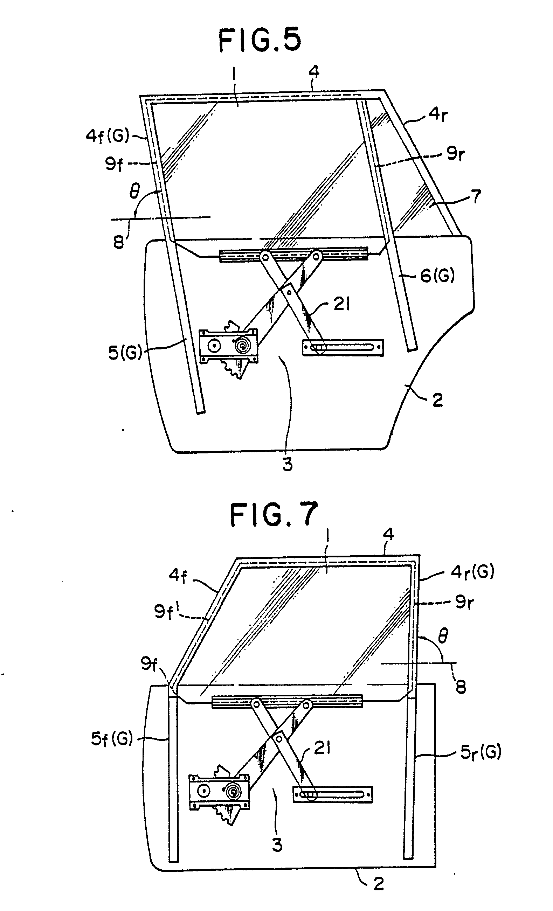

From a formative point of view as well as from the standpoint of aerodynamics or in view of the demand that the vehicle compartment space be made as large as possible, it is the recent trend that the sliding window glass 1 is configured in a curved cross-sectional shape with a radius of curvature R. Thus, the guide members for holding the sliding window glass 1 of such a shape are also configured in a curved cross-sectional shape having a radius of curvature equal to the radius of curvature R of the sliding window glass 1, as shown in Figure 2. Some formative specifications require that the sliding window glass 1 be slidable at a predetermined angle θ, less than a right angle, with respect to a horizontal, line 8 as shown in Figures 1 and 4. It has heretofore been the usual practice that the front and rear edges of the sliding window glass 1 are configured in the form of end faces 9f and 9r inclined relative to the horizontal line 8 with an angle equal to the aforementioned sliding inclination angle of the sliding window glass 1, and that the guide members G are disposed along straight lines 1f and 1r (see Figure 4) inclined with respect to the horizontal line 8.

With the aforementioned conventional sliding window glass guide structure, in the case where the sliding inclination angle θ of the sliding window glass 1 is close to a right angle, the sliding window glass 1 is slid following slide loci along the guide loci of the guide members G as viewed sidewise; as the sliding inclination angle θ of the sliding window glass 1 decreases, however, the sliding loci of the sliding window glass 1 are deviated from the guide loci 1f and 1r of the guide members G as shown by two-dot chain lines in Figure 4. This causes the relationship in relative position between the sliding window glass 1 and the guide members G to be nonuniform so that there is the tendency that gaps occur between the sliding window glass 1 and the glass runs and/or the window glass 1 bites into the glass runs 10. Obviously, such tendency leads to an astable retainment of the sliding window glass 1 by the guide members G, as a result of which the sliding window glass 1 turns out shaky or, in a worse case, unable to be slid.

Accordingly, it is an object of the present invention to provide a novel and improved sliding window glass guide structure which is so designed as to positively hold the sliding window glass which is of a curved cross-sectional shape and obliquely slid, thereby effectively avoiding the aforementioned problems with the prior art. Which prior art forms the preamble of claim 1.

Briefly stated, the structure according to the present invention is provided with sliding window glass guide members which are respectively configured in compliance with the sliding loci of the sliding window glass. More specifically, the present invention is characterized by the features specified in the characterizing portion of claim 1.

Other objects, features and advantages of the present invention will become apparent from the ensuing description taken in conjunction with the accompanying drawings.

Brief description of the drawings

Figure 1 is a view showing a conventional automotive door assembly with the inner panel thereof removed, as viewed from the vehicle compartment side.

Figures 2 and 3 are sectional views taken along the lines II—II and III—III of Figure 1, respectively.

Figure 4 is a view illustrating the relationship between the sliding loci of sliding window glass and the guide loci of conventional guide members.

Figure 5 is a view, similar to Figure 1, showing the sliding window glass guide structure according to an embodiment of the present invention.

Figure 6 is a view illustrating the slide loci of the sliding window glass shown in Figure 5.

Figures 7 and 8 are views, similar to Figure 5, showing the sliding window glass guide structure according to a second and a third embodiment of the present invention, respectively.

Figure 9 is a sectional view taken along the line IX—IX of Figure 8.

Figure 10 is a view, similar to Figure 5, showing the sliding window glass guide structure according to a fourth embodiment of the present invention.

Description of the preferred embodiments

Referring to Figures 5 and 6, there is shown the sliding window glass guide structure according to a first embodiment of the present invention, wherein the present invention is applied to an automotive sashed rear door including sliding window glass 1 and fixed window glass 7.

In this embodiment, the sliding window glass 1 is configured in a curved cross-sectional shape with a predetermined radius of curvature R, and provided, at the front and rear edges thereof, with end faces 9f and 9r each of which is shaped in the form of a helix and inclined, with respect to a horizontal line 8, through an angle equal to the sliding inclination angle θ of the sliding window glass 1.

Furthermore, guide members G are provided which are adapted to slidably retain the sliding window glass 1 at the front and rear edges thereof. The guide members G are comprised of a front leg portion 4f of an upper sash member 4, a lower sash member 5, and a partition sash member 6, and thus similar to those of Figure 1 in this respect. In this embodiment, however, it is to be particularly noted that the guide members G are configured in compliance with the slide loci of the sliding window glass 1. More specifically, as shown in Figure 6, the sliding window glass 1 is slid, along the circumferential surface of a notional cylinder 20 having a radius of curvature R, from the uppermost position abcd to the lowermost position a'b'c'd', so that the front edge $\overline{ab}$ and rear edge $\overline{cd}$ of the sliding window glass 1 are moved, along helixes Sf and Sr each having a helical angle equal to the aforementioned sliding inclination angle θ. Thus, the front and rear guide members G are configured in correspondence to the helixes Sf and Sr mentioned above, respectively.

In this embodiment, use is made of a window regulator 3 which is arranged to support the sliding window glass 1 by means of X type arms 21.

With the sliding window glass support structure according to this embodiment, it is possible to maintain a fixed relationship in relative position between the sliding window glass 1 and the guide members G when the sliding window glass 1 is slid, thus precluding the tendency that gaps occur between the sliding window glass 1 and glass runs 10 (see Figure 3) of the guide members G and/or the sliding window glass 1 bites into the glass runs 10. In this way, the sliding window glass 1 is positively retained by the guide members G so that the possibility is completely precluded that the sliding window glass 1, when slid, turns out shaky and/or is hindered from the sliding movement.

Referring to Figure 7, there is shown the sliding window glass support structure according to a second embodiment of the present invention.

In this embodiment, the present invention is applied to an automotive sashed front door wherein sliding window glass 1 is configured in a curved cross-sectional shape with a radius of curvature R as in the aforementioned first embodiment. Unlike in the first embodiment, however, the front edge of the sliding window glass 1 is shaped in the form of a forwardly inclined end face 9f' for the purpose of securing a side sight, while the rear edge of the sliding window glass 1 is configured in the form of an end face 9r inclined with an angle equal to the sliding inclination angle θ of the sliding window glass 1. Furthermore, the bottom end of the front edge of the sliding window glass 1 is formed as an end face 9f which is parallel to the rear end face 9r.

The sliding window glass 1 is slidably retained, at its front edge or end face 9f, by a guide member G which is constituted by the bottom end of a front leg portion 4f of an upper sash member 4 and a front lower sash member 5, and, at its rear edge or end face 9r, by another guide member G which comprises a rear leg portion 4r of the upper sash member 4 and a rear lower sash member 5r coupled to the bottom end of the rear leg portion 4r. These guide members are similar in construction to those of the aforementioned first embodiment. The front leg portion 4f of the upper sash member, except for its bottom end, retains the front edge of the sliding window glass 1 when the latter assumes its uppermost position, while it retains no part of the sliding window glass 1 when the latter is slid; thus, the front leg portion 4f, except for the bottom end thereof, is configured in a rectilinear form as viewed sidewise.

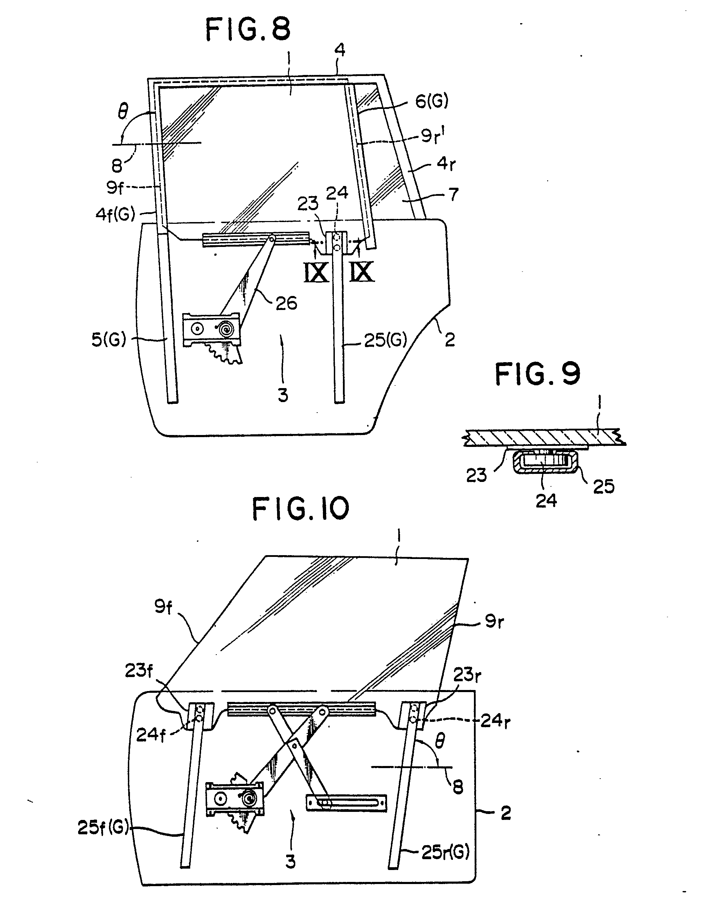

Referring to Figures 8 and 9, there is shown the sliding window glass guide structure according to a third embodiment of the present invention, wherein the present invention is applied to an automotive sashed rear door. As will be seen, this embodiment is different from the first embodiment in that the sliding window glass 1 is provided, only at the front edge thereof, with an end face 9f inclined through an angle equal to the sliding inclination angle θ of the sliding window glass 1 and, at the rear edge thereof, with an end face 9r' which is non-parallel with the end face 9r of the front edge mentioned above. The sliding window glass 1 is slidably retained, at the front edge thereof, by a guide member G which is constituted by a front leg portion 4f of an upper sash member 4 and a lower sash member 5, and, at the rear edge thereof, by another guide member G which is formed by a guide rail provided in the door body 2 and disposed in sliding engagement with a roller 24 secured to the sliding window glass 1 at a rear portion of the bottom edge thereof. These guide members G are similar in construction to those of the first embodiment. A partition sash member 6, which retains the sliding window glass 1 at the rear edge thereof, does not serve as a guide member for the sliding window glass 1, since it retains no part of the sliding window glass 1 when the latter is slid. In this embodiment, there is provided a window regulator 3 which is so designed so to enable the sliding window glass 1 to be slid by means of a single arm 26.

Referring to Figure 10, there is illustrated the sliding window glass guide structure according to a fourth embodiment of the present invention, wherein the present invention is applied to an automotive sashless door. In this embodiment, rollers 24f and 24r are mounted, through back plates 23f and 23r, at front and rear portions of the bottom edge of sliding window glass 1 supported by means of a window regulator 3. Provided in the door body 2 are guide rails 25f and 25r adapted to serve as guide members G. The rollers 24f and 24r are disposed in sliding engagement with the guide rails 25f and 25r, respectively. The guide members G of this embodiment are similar in construction to those of the first embodiment except that the construction thereof is determined on the basis of the sliding inclination angle θ of the sliding window glass 1, irrespective of front and rear end faces 9f and 9r of the sliding window glass 1.

Although in each of the above-described embodiments, the present invention was applied to an automotive door, it is not limited thereto but equally applicable to a sliding type side window or the like.

As will be appreciated from the foregoing discussion, with the sliding window glass guide structure according to the present invention, it is possible to make the slide loci of the sliding window glass and the guide loci of the guide members completely conform to each other so that a positive retainment of the sliding window glass by the guide members can be achieved, preferably by virtue of the fact that each of the guide members is configured in the form of a helix extending along the circumferential surface of a notional cylinder having a predetermined radius of curvature equal to the radius of curvature the sliding window glass.

**Claims**

1. A sliding window glass guide structure for an automotive door (2) or the like, wherein the sliding window glass (1) is configured in a curved cross-sectional shape, having a predetermined curvature and being slidable with a predetermined sliding inclination angle (θ), said structure comprising guide means (G) constituted by front and rear guide members (4f, 5, 5f, 25f; 4r, 5r, 6, 25) which are disposed in spaced relationship with each other characterised in that the said guide members (4f, 5, 5f, 25f; 4r, 5r, 6, 25) are associated with said sliding window glass (1) in such a manner as to guide said sliding window glass (1), when the latter is slid, while preventing the front and rear edges (9f, 9r, 9f', 9r') of said sliding window glass (1) from being deviated from predetermined sliding loci, at least one of the guide members (4f, 5, 5f, 25f; 4r, 5r, 6, 25) being inclined through an angle (θ) substantially equal to the sliding inclination angle (θ) of the sliding window glass (1) and at least one of the guide members (4f, 4r, 6) being helically configurated, extending along a curved plane, the curvature of which substantially corresponds to the curvature of the sliding window glass (1).

2. A sliding window glass guide structure according to claim 1, wherein at least upper portions (4f, 4r, 6) of the window glass (1) slidably retaining guide means (4f, 5, 5f, 25f; 4r, 5r, 6, 25) are configured in the form of helixes extending along the circumferential surface of a notional cylinder, having a radius of curvature (R) substantially equal to said radius of curvature (R) of said sliding window glass (1).

3. A sliding window glass guide structure according to claim 2, wherein the front and rear edges (9f, 9r) of said sliding window glass (1) are inclined, respectively, through an angle substantially equal to said sliding inclination angle (θ) of said sliding window glass (1), the front and rear guide members (4f, 5, 6) are adapted to slidably retain the sliding window glass (1) at the front and rear edges (9f, 9r) thereof.

4. A sliding window glass guide structure according to claim 3, wherein said front guide member is formed by a front leg portion (4f) of an upper sash member (4) and a lower sash member (5) connected to the bottom end of said front leg portion (4f), and said rear guide member is constituted by a partition sash member (6) extending downwardly from said upper sash member (4) in spaced relationship with said front guide member (4f, 5).

5. A sliding window glass guide structure according to claim 2, wherein the rear edge (9r) of said sliding window glass (1) is inclined substantially equal to said sliding inclination angle (θ) of the sliding window glass (1) whereas the front edge (9f') of said sliding window glass (1) is shaped in the form of a forwardly inclined end face provided with a lower end face portion (9f) extending substantially in parallel with said rear edge (9r) of said sliding window glass (1); the rear guide member (4r, 5r) is adapted to permanently retain the rear edge (9r) of the sliding window glass (1) whereas the front guide member is constituted by the bottom end of a front leg portion (4f) and a front lower sash member (5f) guiding the lower end face portion (9f) of the window glass (1) while the front leg portion (4f) retains the front edge (9f') of the window glass (1) after this one has assumed its uppermost position.

6. A sliding window glass guide structure according to claim 5, wherein a front guide member is formed by a forwardly inclined front leg portion (4f) of an upper sash member (4) and a front lower sash member (5f) connected to the bottom end of said front leg portion (4f); and said rear guide member is constituted by a rear leg portion (4r) of said upper sash member (4) and a rear lower sash member (5r) connected to said rear leg portion (4r).

7. A sliding window glass guide structure according to claim 2, wherein the front edge (9f) of the sliding window glass (1) is permanently retained by an inclined front guide member (4f, 5), constituted by a front leg portion (4f) of an upper sash member (4) and a lower sash member (5) whereas a rear guide member (25) is assembled indpendent from the rear edge (9r') of the sliding window glass (1), comprising a guide rail (25) secured to the door body (2) slidably receiving a roller (24) secured to the sliding window glass (1) at a rear portion of the bottom edge thereof, a partition sash member (6) retains the rear edge (9r') of the sliding window glass when said glass (1) takes its uppermost position.

8. A sliding window glass guide structure according to claim 7, wherein said front guide member (4f, 5) is inclined through an angle substantially equal to said sliding inclination angle (θ) of the window glass (1) whereas the partition sash member extends inclined rearwardly.

9. A sliding window glass guide structure according to claim 1, said front and rear guide members being constituted by a front and rear guide rail (25f, 25r), respectively, slidably engaging a front and rear roller (24f, 24r), both rollers (24f, 24r) being secured to the front and rear portions of the bottom edge of the window glass (1) via back plates (23f, 23r).

**Patentansprüche**

1. Führungseinrichtung für gleitverschiebliche Fensterscheiben für eine Kraftfahrzeugtür (2) od.dgl., wobei die gleitverschiebliche Fensterscheibe (1) eine gekrümmte Querschnittsform mit einer bestimmten Krümmung aufweist und mit einem bestimmten Gleitneigungswinkel (θ) gleitverschieblich ist, wobei die Führungseinrichtung Führungsmittel (G) aufweist, die durch ein vorderes und hinteres Führungsteil (4f, 5, 5f, 25f; 4r, 5r, 6, 25) gebildet werden, die in einem Abstand zueinander angeordnet sind, dadurch gekennzeichnet, daß die Führungsteile (4f, 5, 5r, 25f; 4r, 5r, 6, 25) der gleitverschieblichen Fensterscheibe (1) derart zugeordnet sind, daß sie die Fensterscheibe (1) führen, wenn die letztere gleitverschoben wird, während sie verhindern, daß die vordere und hintere Kante (9f,9r,9f',9r') der gleitverschieblichen Fensterscheibe (1) von bestimmten Gleitortskurven abweichen wobei zumindest eines der Führungsteile (4f, 5, 5f, 25f; 4r, 5r, 6, 25) in einem Winkel (θ) geneigt ist, der im wesentlichen gleich dem Gleitneigungswinkel (θ) der gleitverschieblichen Fensterscheibe (1) ist und wobei zumindest eines der Führungsteile (4f, 4r,6) wendelförmig geneigt ist und sich entlang einer gekrümmten Ebene erstreckt, deren Krümmung im wesentlichen der Krümmung der gleitverschieblichen Fensterscheibe (1) entspricht.

2. Führungseinrichtung für eine gleitverschiebliche Fensterscheibe nach Anspruch 1, in der zumindest die oberen Abschnitt (4f,4r,6) der die Fensterscheibe (1) gleitbar haltenden Führungsmittel (4f,5,5f;25f;4r,5r,6,25) in der Art von Schraubenlinien ausgebildet sind, die sich entlang der Umfangsfläche eines gedachten Zylinders mit einem Krümmungsradius (R) erstrecken, der im wesentlichen gleich dem Krümmungsradius (R) der gleitverschieblichen Fensterscheibe (1) ist.

3. Führungseinrichtung für eine gleitverschiebliche Fensterscheibe nach Anspruch 2, in der die vordere und hintere Kante (9f,9r) der gleitverschieblichen Fensterscheibe (1) jeweils in einem Winkel geneigt sind, der im wesentlichen gleich dem Gleitneigungswinkel (θ) der gleitverschieblichen Fensterscheibe (1) ist, wobei das vordere und hintere Führungsteil (4f,5,6) dazu ausgelegt ist, die gleitverschiebliche Fensterscheibe (1) an ihrer Vorderund Hinterkante (9f,9r) gleitbar zu halten.

4. Führungseinrichtung für eine gleitverschiebliche Fensterscheibe nach Anspruch 3, in der das vordere Führungsteil durch einen Vordersteg (4f) eines oberen Schiebefensterrahmens (4) bildet und ein unterer Schiebefensterrahmen (5) mit dem unteren Ende des Vordersteges (4f) verbunden ist, und daß das hintere Führungsteil durch einen Teilrahmen (6) gebildet wird, der sich von dem oberen Schiebefensterrahmen (4) im Abstand zu dem vorderen Führungsteil (4f,5) nach unten erstreckt.

5. Führungseinrichtung für eine gleitverschiebliche Fensterscheibe nach Anspruch 2, wobei die hintere Kante (9r) der gleitverschieblichen Fensterscheibe (1) im wesentlichen die gleiche Neigung wie der Gleitneigungswinkel (θ) der gleitverschieblichen Fensterscheibe (1) geneigt ist, während die Vorderkante (9f') der gleitverschieblichen Fensterscheibe (1) in Form einer nach vorn geneigten Endfläche ausgeführt ist, die mit einem unteren Endflächenabschnitt (9f) versehen ist, der sich im wesentlichen parallel zur hinteren Kante (9r) der gleitverschieblichen Fensterscheibe (1) erstreckt; wobei das hintere Führungsteil (4r,5r) vorgesehen ist, um die hintere Kante (9r) der gleitverschieblichen Fensterscheibe (1) ständig zu halten, während das vordere Führungsteil durch das untere Ende eines Vordersteges (4f) und ein vorderes, unteres Fensterrahmenteil (5f) gebildet ist, das den unteren Endflächenabschnitt (9f) der Fensterscheibe (1) fürht, während der Vordersteg (4f) die Vorderkante (9f') der Fensterscheibe (1) hält, nachdem diese ihre obere Endlage eingenommen hat.

6. Führungseinrichtung für ein gleitverschiebliche Fensterscheibe nach Anspruch 5, bei der ein vorderes Führungsteil durch einen nach vorn geneigten Vordersteg (4f) eines oberen Schiebefensterrahmens (4) und ein vorderes, unteres Fensterrahmenteil (5f) gebildet ist, das mit dem unteren Ende des Vordersteges (4f) verbunden ist; und wobei das hintere Führungsteil durch einen hinteren Steg (4r) des oberen Schiebfensterrahmens (4) sowie ein hinteres, unteres Fensterrahmenteil (5r) gebildet ist, das mit dem hintere Steg (4r) verbunden ist.

7. Führungseinrichtung für ein gleitverschiebliche Fentsterscheibe nach Anspruch 2, in der die Vorderkante (9f) der gleitverschieblichen Fensterscheibe (1) ständig durch ein geneigtes, vorderes Führungsteil (4f,5) gehalten ist, das durch einen Vordersteg (4f) des oberen Schiebefensterrahmens (4) und ein unteres Fensterrahmenteil (5) gebildet wird, während ein hinteres Führungsteil (25) unabhängig von der hinteren Kante (9r') der gleitverschieblichen Fensterscheibe (1) angeordnet ist und eine Führungsschiene (25) aufweist, die an dem Türkörper (2) befestigt ist und gleitbar eine Laufrolle (24) aufnimmt, welche mit der gleitverschieblichen Fensterscheibe (1) an einem hinteren Abschnitt der unteren Kante derselben fest verbunden ist, wobei ein Teilrahmen (6) hintere Kante (9r') der gleitverschieblichen Fensterscheibe hält, wenn die Fensterscheibe (1) ihre obere Endlage einnimmt.

8. Führungseinrichtung für eine gleitverschiebliche Fensterscheibe nach Anspruch 7, in der das vordere Führungsteil (4f,5) in einem Winkel geneigt ist, der im wesentlichen gleich dem Gleitverschiebungswinkel (θ) der Fensterscheibe (1) ist, während sich der Teilrahmen nach hinten geneigt erstreckt.

9. Führungseinrichtung für ein gleitverschiebliche Fensterscheibe nach Anspruch 1, in der das vordere und hintere Führungsteil durch eine vordere und hintere Führungsschiene (25f,25r) gebildet sind, mit denen gleitbar eine vordere und hintere Laufrolle (24f,24r) zusammenwirken, wobei beide Laufrollen (24f,24r) mit dem vorderen und hinteren Abschnitt der Bodenkante der Fensterscheibe (1) über Rückplatten (23f,23r) fest verbunden sind.

**Revendications**

1. Structure de guidage pour fenêtre coulissante pour une portière d'automobile (2) ou analogue, où la fenêtre coulissante (1) est configurée à une forme en section transversale courbée, ayant une courbure prédéterminée et étant coulissante à un angle prédéterminé de glissement (θ), ladite structure comprenant un moyen de guidage (G) constitué d'organes avant et arrière de guidage (4f, 5, 5f, 25f; 4r, 5r, 6, 25) qui sont disposés en relation espacée l'un avec l'autre, caractérisée en ce que lesdits organes de guidage (4f, 5, 5f, 25f; 4r, 5r, 6, 25) sont associés à ladite fenêtre coulissante (1) de manière à guider ladite fenêtre coulissante (1), lorsque cette dernière est glissée, tout en empêchant les bords avant et arrière (9f, 9r, 9f', 9r') de ladite fenêtre coulissante (1) de s'écarter de lieux prédéterminés de glissement, au moins l'un desdits organes de guidage (4f, 5, 5f, 25f; 4r, 5r, 6, 25) étant incliné sur un angle (θ) sensiblement égal à l'angle d'inclinaison de glissement (θ) de la fenêtre coulissante (1) et au moins l'un des organes de guidage (4f, 4r, 6) étant configuré en hélice, s'étendant le long l'un plan courbé, dont la courbure correspond sensiblement à la courboure de la fenêtre coulissante (1).

2. Structure de guidage pour fenêtre coulissante selon la revendication 1 où au moins les portions supérieures (4f, 4r, 6) du moyen de guidage (4f, 5, 5f, 25f; 4r, 5r, 6, 25) retenant de manière coulissante la fenêtre (1) sont configurées sous la forme d'hélices s'étendant le long de la surface circonférentielle d'un cylindre imaginaire, ayant un rayon de courbure (R) sensiblement égal audit rayon de courbure (R) de ladite fenêtre coulissante (1).

3. Structure de guidage pour fenêtre coulissante selon la revendication 2 où les bords avant et arrière (9f, 9r) de ladite fenêtre coulissante (1) sont inclinés, respectivement sur un angle sensiblement égal audit angle d'inclinaison (θ) de glissement de ladite fenêtre coulissante (1), les organes avant et arrière de guidage (4f, 5, 6) sont adaptés à retenir de manière coulissante ladite fenêtre coulissante (1) à ses bords avant et arrière (9f, 9r).

4. Structure de guidage pour fenêtre coulissante selon la revendication 3 où ledit organe de guidage avant est formé d'une portion de branche avant (4f) d'un organe de châssis supérieur (4) et d'un organe de châssis inférieur (5) relié à l'extrémité inférieure de ladite portion de branche avant (4f), et ledit organe de guidage arrière est constitué d'un organe de châssis de séparation (6) qui s'étend vers le bas dudit organe de châssis supérieur (4) en relation espacée avec ledit organe de guidage avant (4f, 5).

5. Structure de guidage pour fenêtre coulissante selon la revendication 2 où le bord arrière (9r) de ladite fenêtre coulissante (1) est incliné de manière sensiblement égal à l'angle d'inclinaison de glissement (θ) de la fenêtre coulissante (1) tandis que le bord avant (9f') de ladite fenêtre coulissante (1) est configuré sous la forme d'une face extrême inclinée vers l'avant pourvue d'une portion de face extrême inférieure (9f) qui s'étend sensiblement parallèlement audit bord arrière (9r) de ladite fenêtre coulissante (1); l'organe arrière de guidage (4r, 5r) est adapté à retenir en permanence le bord arrière (9r) de la fenêtre coulissante (1) tandis qui l'organe de guidage avant est constitué de l'extrémité inférieure d'une portion de branche avant (4f) et d'un organe de châssis inférieur avant (5f) guidant la portion de face extrême inférieure (9f) de la fenêtre coulissante (1) tandis que la portion de branche avant retient le bord avant (9f') de la fenêtre (1) après que celle-ci ait pris sa position la plus haute.

6. Structure de guidage pour fenêtre coulissante selon la revendication 5 où un organe de guidage avant est formé par une portion de jambe avant inclinée vers l'avant (4f) d'un châssis supérieur (4) et d'un organe de châssis inférieur (5f) relié à l'extrémité inférieure de ladite portion de jambe avant (4f); et ledit organe de guidage arrière est constitué d'une portion de jambe arrière (4r) dudit organe de châssis supérieur (4) et d'un organe de châssis inférieur arrière (5r) connecté à ladite portion de jambe arrière (4r).

7. Structure de guidage pour fenêtre coulissante selon la revendication 2 où le bord avant (9f) de la fenêtre coulissante (1) est retenu en permanence par un organe avant incliné de guidage (4f, 5), constitué d'une portion de branche avant (4f) d'un organe de châssis supérieur (4) et d'un organe de châssis inférieur (5) tandis qu'un organe de guidage arrière (25) est assemblé indépendamment du bord arrière (9r') de la fenêtre coulissante (1), comprenant un rail de guidage (25) fixé au corps (2) de la portière, recevant demanière coulissante un rouleau (24) fixé à la fenêtre coulissante (1) à une portion arrière de son bord inférieur, un organe de seuil de séparation (6) retient le bord arrière (9r') de la fenêtre coulissante lorsque ladite fenêtre (1) prend sa position la plus haute.

8. Structure de guidage pour fenêtre coulissante selon la revendication 1 où ledit organe de guidage avant (4f, 5) est incliné sur un angle sensiblement égal audit angle d'inclinaison de glissement (θ) de la fenêtre (1) tandis que l'õrgane de châssis de séparation s'étend en étant incliné vers l'arrière.

9. Structure de guidage pour fenêtre coulissante selon la revendication 1, lesdits organes avant et arrière de guidage étant constitués par un rail avant et arrière de guidage (25f, 25r), respectivement, en engagement coulissant avec un rouleau avant et arrière (24f, 24r), les deux rouleaux (24f, 24r) étant fixés aux portions avant et arrière du bord inférieur de la fenêtre (1) par des plaques d'appui (23f, 23r).

# FIG.I
## PRIOR ART

# FIG.6

# FIG. 2
## PRIOR ART

4

1

R

G

2

5

# FIG. 3
## PRIOR ART

10

6

11

1

7

# FIG. 4
## PRIOR ART

lf

lr

9f

1

$\theta$

8

9r

1

1

# FIG.5

# FIG.7

0 086 962

## FIG.8

## FIG.9

## FIG.10

4